# EUROPEAN PATENT SPECIFICATION

(11) **EP 2 560 481 B1**
(45) Date of publication and mention of the grant of the patent: **19.02.2014**
(21) Application number: 10714494.1
(22) Date of filing: 20.04.2010
(51) Int. Cl.: A01K 31/19, A01K 31/18, A01K 31/20, A01K 41/00

(54) **CLIMATE CHAMBER PROVIDED WITH CIRCULATION SYSTEM**
KLIMAKAMMER MIT ZIRKULATIONSSYSTEM
CHAMBRE CLIMATISÉE POURVUE D'UN SYSTÈME DE CIRCULATION

(43) Date of publication of application: 27.02.2013
(73) Proprietor: HatchTech Group B.V., 3905 TB Veenendaal (NL)
(72) Inventor: METER, Tjitze, NL-3903 DH Veenendaal (NL)
(74) Representative: Nederlandsch Octrooibureau
(86) International application number: PCT/NL2010/050210
(87) International publication number: WO 2011/133022

(56) References cited:
- WO-A1-00/08922
- US-A- 3 396 702

## Description

### Background

The present invention relates to a climate chamber, such as a climate chamber for poultry, in particular young chicken.

Such a climate chamber is known from WO-2009/014422. That application relates to a heat exchanger, a climate chamber provided with the heat exchanger and use of a climate chamber, as well as crate.

### Summary of the invention

The invention aims to provide a climate chamber with an improved controllability of growth conditions for young chicken.

Another object of the invention is to improve an alternative solution for the controllability of growth conditions for young chicken.

According to a first aspect of the invention this is realized with a climate chamber, such as a climate chamber for poultry, in particular young chicken, in which the climate chamber comprises;
- at least one heat exchanger for heating or cooling the climate chamber to an optimal temperature for growing young chicks,
- a main flow system for heating or cooling the young chicken by transferring heat or cold from the at least one heat exchanger to the young chicken,
- at least one chamber compartment, at least one side of which is delimited upstream by the at least one heat exchanger,
and wherein the chamber compartment comprises;
- a sensor device for measuring one or more parameters selected from the group temperature, relative humidity, CO2 content, flow velocity, in the at least one chamber compartment,
- a secondary flow B system operationally coupled with the sensor device for controlling one or more parameters selected from the group (temperature, relative humidity, CO2 content, flow velocity) in the at least one compartment.

The main flow is referred to with A and Aᵣ specifically for the return flow outside the at least one chamber compartment. The climate chamber according to the invention is beneficial because the growth conditions are controlled as close to the chicken as possible while at the same time a main flow common to all chamber compartments is used to transport heat or cold through the climate chamber, which is very efficient in connection with cost of operation and makes use of the thermal capacity of the whole climate chamber.

In a specific embodiment of the climate chamber according to the invention, the secondary flow system comprises a fan for controlling the secondary flow B.

The fan controls the intake of fresh air from outside the climate chamber, as well as the flow velocity of the secondary flow B, which even more improves the control of the growth conditions close to the young chicken.

In a specific embodiment of the climate chamber according to the invention, the secondary flow system B comprises an outlet for debouching the secondary flow B in the main flow A in the at least one chamber compartment, and wherein said outlet preferably forms part of heat exchanger.

Debouching the secondary flow B in the main flow A is beneficial for the control effect of the secondary flow B and therefore has a positive effect on controllability. The secondary flow B is close to the heat source, being the heat exchanger.

In a specific embodiment of the climate chamber according to the invention, the heat exchanger constitutes a passage for the secondary flow B. The heat source constituting a passage for the secondary flow B, ensures an optimal thermal exchange between the heat exchanger and the secondary flow B, beside the exchange between the heat exchanger and the main flow A. Herewith, preheating of precooling is possible for the secondary flow B, if needed.

In a specific embodiment of the climate chamber according to the invention, the secondary flow B system comprises a valve, specifically a one-way valve, at the outlet for preventing ingress of dust and fine particles from the at least one chamber compartment into the secondary flow B system, specifically for preventing ingress of dust and fine particles from the at least one chamber compartment into the interior of the heat exchanger.

The secondary flow B system comprising a valve at the outlet for preventing ingress of dust and fine particles from the at least one chamber compartment into the secondary flow B system advantageously prevents unnecessary spread of dust or germ of a disease which is of extreme importance in a monoculture. Notwithstanding the valve is applied to an outlet, the valve still has a above mentioned positive effect.

In a specific embodiment of the climate chamber according to the invention, the climate chamber comprises a row of chamber compartments, wherein each chamber compartment comprises a secondary flow B system.

The climate chamber comprising a row of chamber compartments renders the main flow even more efficient while still each chamber compartment has an optimal controlability because of the secondary flow system B.

In a specific embodiment of the climate chamber according to the invention, the secondary flow B system of each camber compartment comprises a fan for controlling the secondary flow B.

In a specific embodiment of the climate chamber according to the invention, the secondary flow B system comprises an inlet for fresh air, wherein the inlet is separate from any other inlet of the climate chamber.

The seperate inlet improves the controllability of the growth conditions in the climat chamber and specifically in a chamber compartment even more.

In a specific embodiment of the climate chamber according to the invention, the at least one chamber compartment comprises a compartment outlet for releasing an overflow C for compensating the secondary flow B.

The chamber compartment outlet prevents increase of air velocity and enables a common outlet for all the chamber compartments. An increase of air velocity is unwanted because above an air velocity of about 4 m/s, the young chicken become restless and will start walking.

In a specific embodiment of the climate chamber according to the invention, the overflow C debouches in the main flow Ar outside the at least one chamber compartment. This even more enables a common outlet for all the chamber compartments of the climate chamber and the use of a heat-exchanger for recovering of energy out of the main return flow Aᵣ.

In a specific embodiment of the climate chamber according to the invention, the chamber compartment comprises a door for allowing a stack of crates in and out the chamber compartment and wherein preferably the chamber compartment outlet is provided below the door.

In a specific embodiment of the climate chamber according to the invention, the door is hingeable towards the ceiling of the climate chamber for hamper free allowing a stack of crates in and out the chamber compartment. The door being hingeable towards the ceiling of the climate chamber enables an optimal configuration of the climat chamber.

In a specific embodiment of the climate chamber according to the invention, the climate chamber comprises a climate chamber outlet for releasing the overflow C outside the climate chamber.

In a specific embodiment of the climate chamber according to the invention, the climate chamber comprises an outlet heat exchanger provided at the chamber outlet for winning back heat or cold from the released overflow C from the climate chamber. Here, the released overflow means the sum of overflows C from the chamber compartments.

The invention further relates to a device comprising one or more of the characterising features described in the description and/or shown in the attached drawings.

The various aspects discussed in this patent can be combined in order to provide additional advantageous advantages.

### Description of the drawings

The invention will be further elucidated referring to an preferred embodiment shown in the drawing wherein shown in:
- Fig. 1a in perspective view a part of a climate chamber;
- fig. 1b the climat champer of fig. 1b with a ceiling;
- fig. 2 a schematic topview of the air flow in the climate chamber;
- fig. 3 a detail of fig. 5;

The present invention in particular uses a climate chamber or incubator chamber, also disclosed in WO-2009/014422, in particular suitable for the current invention and described in the following drawings:
- Fig. 4 shows a perspective view of a heat exchanger used in the invention;
- Fig. 5 shows a cross-sectional perspective view of a part of the heat exchanger from Fig. 4;

- Fig. 6 shows a cross-sectional side view of a part of the heat exchanger from Fig. 4 together with part of a stack of crates;
- Fig. 7 shows a highly diagrammatic top view of a climate chamber according to the invention;
- Fig. 8 shows a vertical view in longitudinal section of the climate chamber according to Fig. 7, which view in longitudinal section is taken along arrows V in Fig. 7;
- Fig. 9 shows a perspective view of a crate from the stack of crates as illustrated in Fig. 6;
- Fig. 10 shows a first vertical view in longitudinal section of the crate from Fig. 9, which view in longitudinal section is taken along arrows VII in Fig. 9;
- Fig. 11 shows a second vertical view in longitudinal section of the crate from Fig. 9, which view in longitudinal section is taken along arrows VIII in Fig. 9.

### Detailed description of embodiments

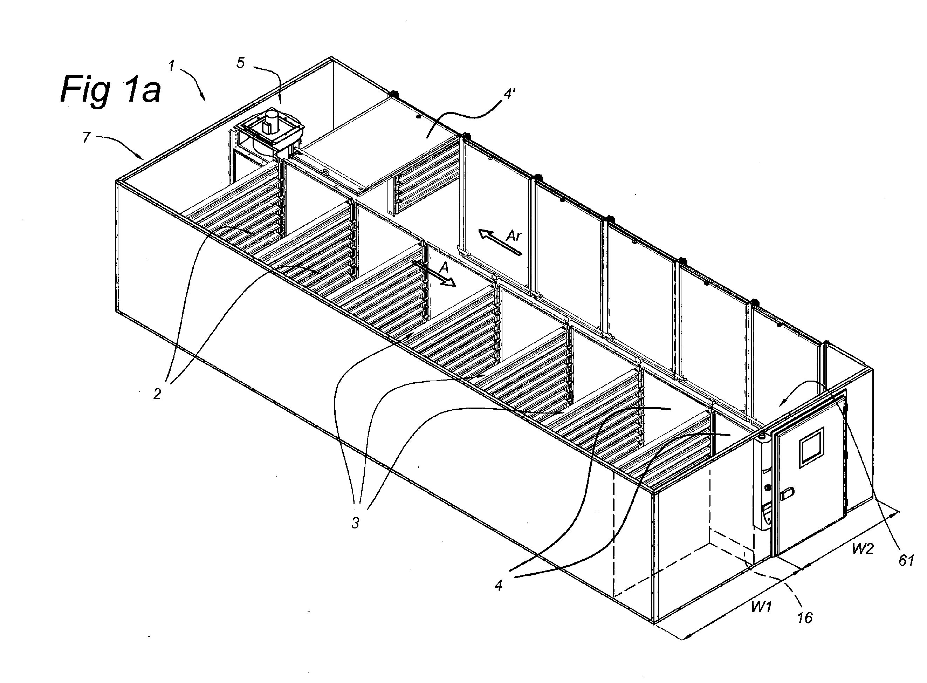

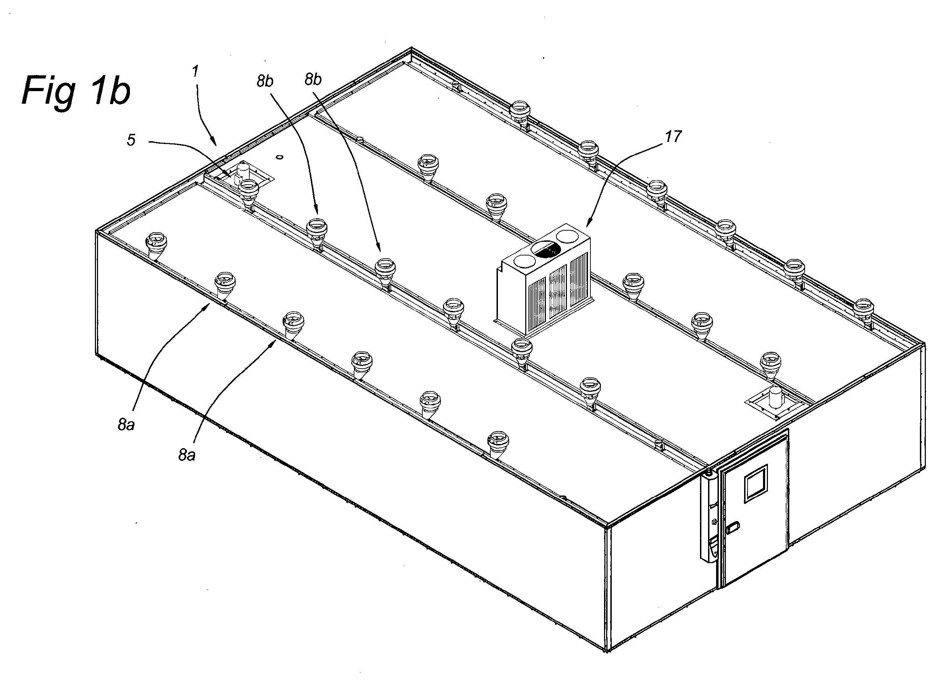

Fig. 1a shows in perspective view a part of a climate chamber 1 and fig. 1b shows the climat champer of fig. 1b with a ceiling. Here, each compartment chamber 2 is delimited by one or two heat exchangers 3. A main air flow A, Aᵣ is driven by a main fan 5. The main flow A flows trough a row 7 of a number of compartment chambers 2. In fig. 1a a second row of compartment chambers 2 is not shown. The main flow Aᵣ returns through the corridor 61. Here, each upstream heat exchanger 3 of a compartment chamber 2, comprises a secondary flow system B for controlling the growth conditions in every separate chamber compartment 2. Here every heat exchanger 3 comprises an inlet 8a, 8b, here specifically two inlets 8a, 8b, for intake of fresh air. Here, the inlet 8a, 8b is the only inlet for fresh air for the climate chamber 1, specifically for the chamber compartment 2, therewith improving the manageability and controllability of the growt conditions in the climate chamber 1, specifically in the chamber compartments 2, even more specifically in every separate chamber compartment 2.

Here every chamber compartment 2 comprises an outlet 16 for releasing an overflow C for compensating the secondary flow B. The outlet 16 is provided below the door 4 of a chamber compartment 2. Here, the door 4 is hingeable connected with the ceiling of the climate chamber 1 and hinges upwards said ceiling for allowing acces to a chamber compartment 2. The door 4 hinging towards the hinged position 4' is beneficial for accesability of the chamber compartment 2 and the footprint of the climate chamber 1. The width W₁, W₂ of both the row 7 and the corridor 61 is configured accordingly.

Here, he climate chamber 1 comprises a climate chamber outlet 17 for releasing the overflow C outside the climate chamber 1. This enables a central winning back of energy for the released flow C. Here the outlet 17 is provided centrally on the ceiling of the climat chamber for miniming disturbance of the flow Ain each of the chamber compartments 2. Here the climat chamber outlet 17 is the only outlet of the climate chamber 1 which improves the controllability of the growth conditions in the climate chamber 1, specifically the chamber compartments 2 of the climate chamber 1.

Here, the climate chamber 1 comprises an outlet heat exchanger provided at the chamber outlet 17 for winning back heat or cold from the released overflow C from the climate chamber. Here, the released overflow means the sum of overflows C from the chamber compartments.

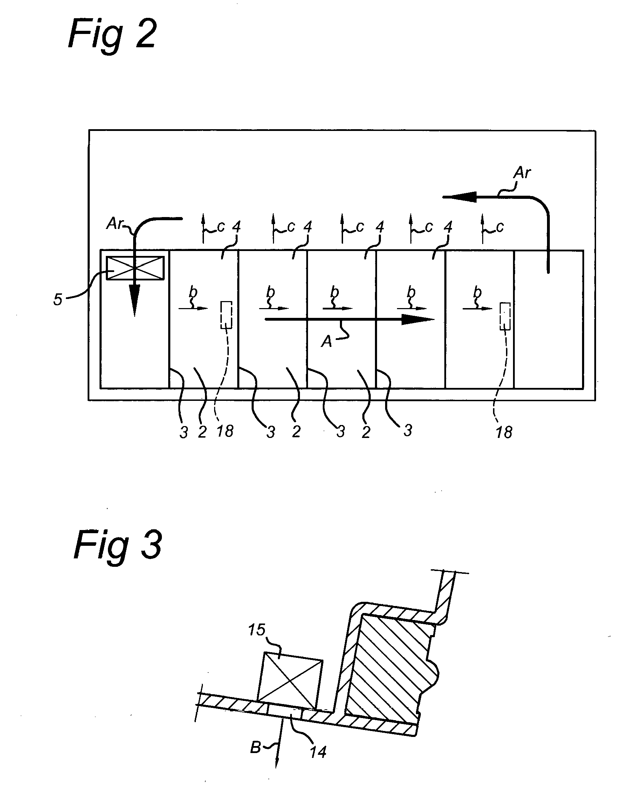

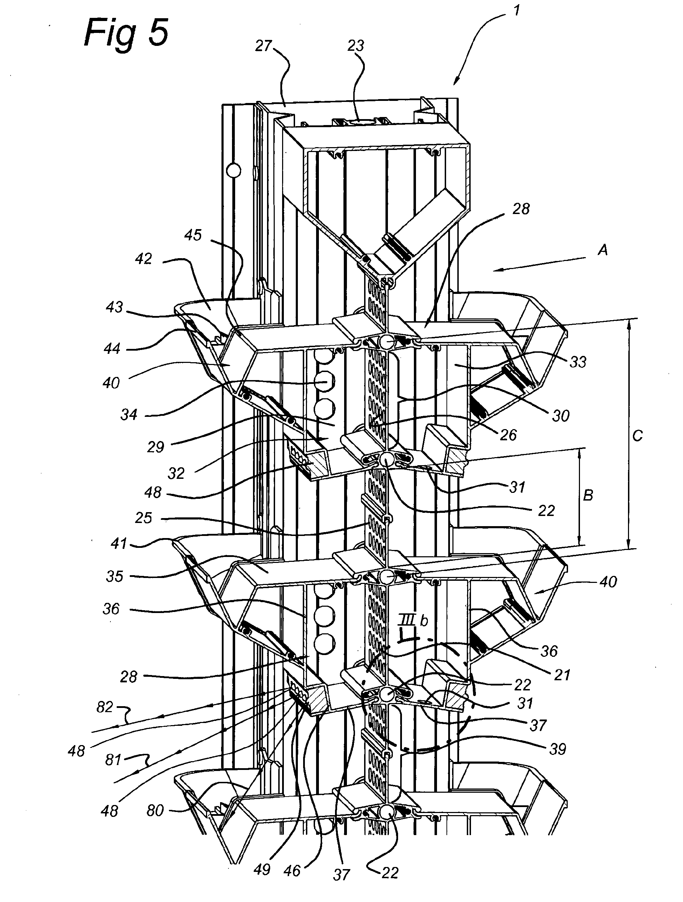

Fig. 2 shows a schematic topview of the air flows A, Aᵣ, B, C in the climate chamber 1. A main flow A is driven through the climat chamber 1 by the fan 5. The main flow Aᵣ returns through the corridor 61 in fig. 1a. Here, each chamber compartment 2 is provided with a secondary flow system B for controlling the growth conditions in each seperate chamber compartment 2. Here, each chamber compartment 2 is provided with an outlet 16, here below the door 4 for compensating the secondary flow B. Here each chamber compartment 2 is provided with a sensor device 18 for measuring one or more parameters selected from the group temperature, relative humidity, CO2 content, flow velocity. The sensor device 18 is operationally coupled by means of a control unit with the secondary flow system B for controlling the growth conditions in each separate chamber compartment 2.fig. 3 shows a detail of an embodiment of a heat exchanger of a climate chamber of fig. 5, only differences are explained with fig. 3 that shows a detail of fig. 5. Here the secondary flow B system comprises a valve 15 at the outlet 14 for preventing ingress of dust and fine particles from the chamber compartment 2 into the secondary flow B system.

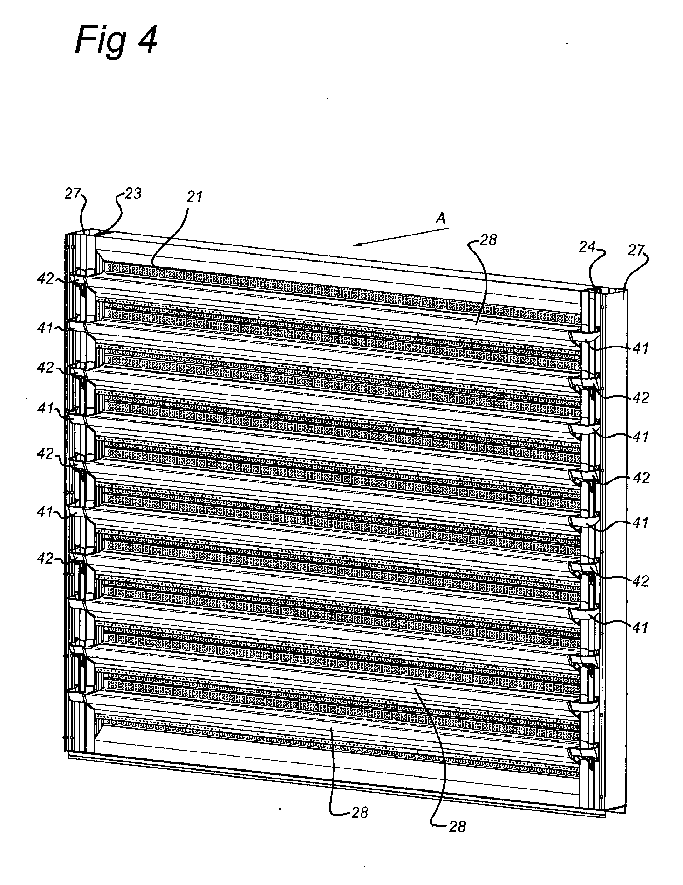

The present invention is in particular suitable for a climate chamber or incubator chamber, also disclosed in WO-2009/014422, and described below with reference to the figs 4-11.

Figs 4, 5 and 6 show a heat exchanger for use in a climate chamber. This heat exchanger is constructed around a panel-shaped body 21 having one or more fluid lines 22. The panel-shaped body 21 is provided with perforations 25 and 26. These perforations make it possible for a gas stream (arrow A) to pass through the panel-shaped body 21 in a direction transverse to the panel-shaped body 21. Similarly to a radiator, the panel-shaped body 21 can be brought to a specific temperature by means of the fluid flowing through the one or more fluid lines. The one or more fluid lines extend between a feed line and a discharge line for said fluid. The panel-shaped body and the fluid lines will usually be made of a metal and form an integral part of one another (for example by being welded to one another, soldered to one another or by extruding the lines and the body in a single operation to form a single extrusion profile). Such a heat exchanger, as described above with reference to Figs 4, 5 and 6, can also be seen in Figs 3 and 4 of WO 00/08922. This (known) heat exchanger is provided, in particular, with gassing ducts 28.

The gassing ducts 28 run parallel to one another and along the panel-shaped body 21. The gassing ducts 28 are fed by one or more medium supply ducts 27 and are connected thereto by passage openings 34. As can be seen in Fig. 4, a tubular medium supply duct 27 is provided along opposite sides of the panel-shaped body 21 so that the gassing ducts 28 can be supplied with medium from two sides simultaneously. The gassing ducts 28 extend between the latter and transversely to the medium supply ducts 27. The gassing ducts 28 are provided at a centre-to-centre distance C from one another in such a manner that in each case one intermediate zone 39 of the panel-shaped body 21 remains clear between two gassing ducts 28 situated one above the other. The height B of this intermediate zone 39 may be, for example, 7 to 10 cm, such as approximately 8.5 cm in this embodiment. The gas stream A can pass through the panel-shaped body 21 via the perforations 25 in this intermediate zone 39.

Each gassing duct 28 has an interior 29 which is delimited by a top wall 35, a bottom wall 37 and two side walls 36. The panel-shaped body 21 in each case extends with a part 30 through the gassing duct 28, which part forms a partition, as it were, which divides the gassing duct 28 into a first duct compartment 32 and a second duct compartment 33. Both compartments extend along the entire length of the gassing duct 28 and are in this case of equal size and shape. However, the duct compartments do not have to be of equal size and shape. It is also conceivable for there to be only one compartment if the panel-shaped body delimits a side wall of the gassing duct, for example, if the part 30 has been cut away, for example, or if the gassing duct has been placed against or close to the panel-shaped body on the outside of the panel-shaped body.

In order to ensure that the medium supplied via the gassing ducts 28 flows out along the panel-shaped body 21, distributed in the surrounding area, in particular the gas stream directed transversely to the panel-shaped body 21, each gassing duct 28 is provided with outflow openings 31 arranged over the length of said gassing duct in a distributed manner. By varying the size of these outflow openings 31 and/or the distance between adjacent outflow openings 31, an even delivery along the entire length of the gassing duct 28 can be achieved. In the embodiment illustrated in Figs 4, 5 and 6, in each case only the second duct compartment 33 is provided with outflow openings 31 and the first duct compartment is substantially closed, except for the passage openings 34 and the perforations 26. This offers the advantage that the medium supplied spreads along the length of the gassing duct in the first compartment while, in the meantime, the temperature is influenced (that is to say is increased or reduced) by the temperature of the part 30 of the panel-shaped body, which part acts as a partition, then flows to the second compartment via the perforations 26 in said part 30 which act as a partition, while, in the meantime, the temperature of the medium is influenced again, and then flows to the outflow openings via the second compartment, while the temperature of the medium is in this case too influenced again in the meantime.

The medium supply ducts 27 are provided along opposite edges of the panel-shaped body 21 and attached thereto. Thus, the heat exchanger can be produced as a modular unit, of which only the two medium supply ducts have to be connected upon installation. Furthermore, the feed line 23 and discharge line 24 for fluid are accommodated inside the medium supply ducts. In practice, this can be achieved relatively easily without the dimensions of the medium supply ducts having to increase substantially. After all, the fluid will generally be a fluid such as water, so that these lines 23 and 24 can be relatively small, compared to the supply duct for gaseous medium. Another advantage is the fact the medium supply duct thus protects the line 23 and/or 24 against damage and that the temperature of the medium can be influenced, if desired - by heating or cooling by means of the line 23 and/or 24 - while it is flowing through the medium supply duct.

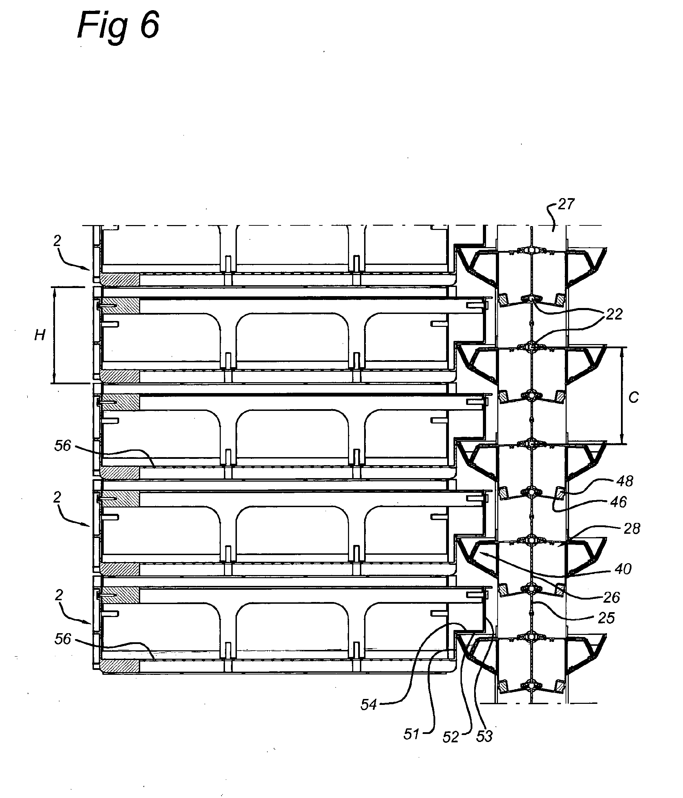

As can be seen in Figs 5 and 6, the interior 29 of each gassing duct 28 touches the exterior 38 of a fluid line 22, both at the top wall 35 and at the bottom wall 37. This improves the exchange of heat between the fluid and the medium.

According to a further embodiment, each gassing duct 28 of the heat exchanger 1 is provided with a trough 40 having a first end 41 and a second end 42. These troughs 40 can be used for moisturization by filling them with a liquid, in particular water, and allowing it to evaporate. When used in a climate chamber containing birds, these troughs 40 can also be used as drinking troughs. In order to simplify the filling of the troughs 40 with liquid, the latter are in particular provided with an overflow 43 near the second end, and the troughs are staggered one above the other, in each case with the second end 42 of a trough 40 situated at a higher level above the first end 41 of a trough 40 situated at a lower level. The liquid can then be supplied at the first end 41 of the top trough, will then fill the top trough up to the filling level determined by the overflow, subsequently fill the trough situated underneath up to the filling level determined by the overflow thereof, etcetera, until the bottom trough is also filled. In order to ensure that the liquid flows to each subsequent trough and to prevent flooding, in case there is an obstacle in one trough, the first longitudinal top trough edge 44 is higher than the second longitudinal top trough edge 45, which is closer to the panel-shaped body 21, and the top wall 35 of the gassing duct 28 in each case continues up to the second longitudinal top trough edge 45. The liquid can then pass the obstacle via the top wall 35.

Referring to Figs 5 and 6, each gassing duct is furthermore provided, if desired, with a fastening means, such as a receiving slot 46, for attaching a lighting fixture 47 (illustrated only in Fig. 5). This fixture 47 is provided with a row comprising a plurality of lighting LEDs 48, 49 (LED = light-emitting diode). Here, several LEDs 49 are in each case directed towards the trough 40 underneath (directional arrow 80 in Fig. 5) in order to illuminate the latter. The applicant has found that if the troughs 40 are drinking troughs for poultry, in particular for chicks, it is advantageous if these LEDs emit red light. The birds can then easily find the drinking trough. Other LEDs 48 may be directed in various directions (directional arrows 81 and 82 in Fig. 5) in order to ensure even illumination and prevent blinding the birds.

The heat exchanger 1 can be used in a climate chamber in an advantageous manner, in particular in a climate chamber for rearing animals, in particular very young animals, such as chicks less than 4 days old or of an age of 0 or 1 days. Such very young animals, such as in particular chicks, are not yet able to control their own body temperature very well. In order to rear them well, it is important that they are kept at a predetermined temperature, which is dependent on the type of animal, in particular during the initial phase after hatching (birth), and to control this temperature very accurately (that is to say with an accuracy of ± 1 °C, preferably with an accuracy of ± 0.5 °C, or with a greater accuracy, such as ± 0.2 °C or less). The term climate chamber is particularly understood to mean a device having an interior space, which can control the temperature in and throughout this interior space with an accuracy of ± 1 °C, preferably with an accuracy of ± 0.5 °C, or with a greater accuracy, such as ± 0.2 °C or less (that is to say, the greatest difference in temperature between two spots in said space will be at most the value of said 'accuracy'). Controlling the temperature with such accuracy is also often desirable when ripening fruit, hatching eggs and with other temperature-dependent processes. In that case, a climate chamber is used, the walls of which are insulated and in the interior of which a certain desired climatized environment can be maintained.

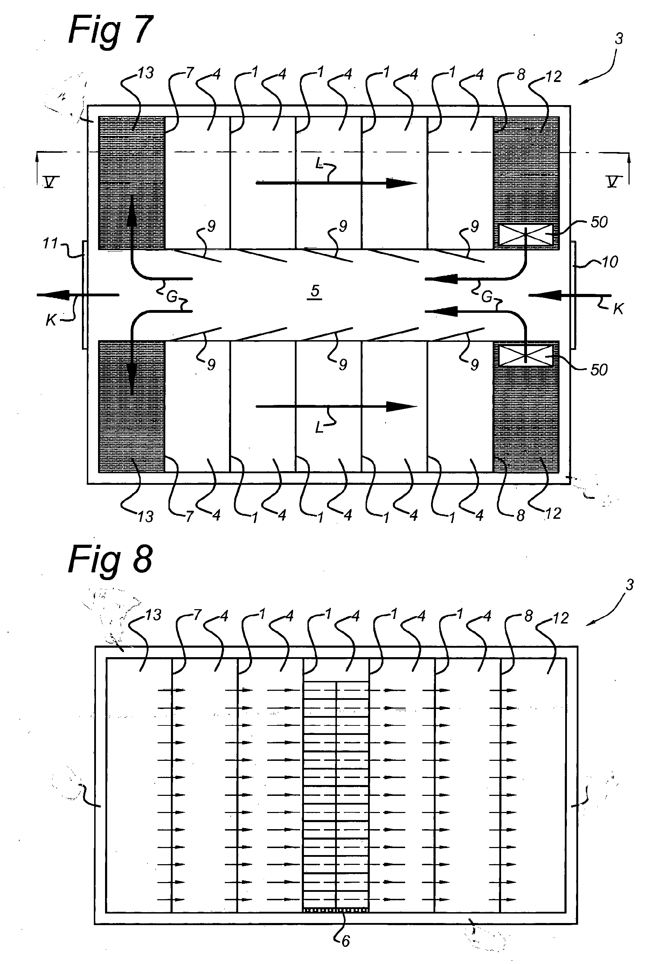

Figs 7 and 8 highly diagrammatically show such a climate chamber 3, which in this case is in particular intended for rearing chicks which have just hatched. This climate chamber is delimited on the outside by thermally insulated side walls a thermally insulated ceiling and a floor, which is preferably also thermally insulated. The climate chamber 3 has at least one chamber compartment 4 in which the young chicken are kept or stored under conditioned circumstances, such as chicks, is placed. In the illustrated example, there are two rows with five chamber compartments 4 each. The rows are on either side of a corridor 5 and are accessible from the corridor 5 via doors 9. Entering and exiting the climate chamber 3 is possible by means of at least one door 10, 11. In this example, a door 10 is provided at one end of the corridor, which is intended in particular for entering the corridor 5 of the climate chamber, and a door 11 is provided at the other end which is intended in particular for exiting the corridor 5 of the climate chamber.

At one end of each row of chamber compartments 4 an inlet chamber 13 is in each case provided for introducing conditioned gas, such as air, into the upstream chamber compartment 4, and an outlet chamber 13 is in each case provided at the other end of each row of chamber compartments 4 for collecting gas coming from the downstream chamber compartment 4. Although it is not required, it is energetically advantageous subsequently to feed the gas from the outlet chamber 13 back to the inlet chamber. The gas may be fed back along the top of the chamber compartments, as is illustrated in WO 00/08922. However, this method requires a lot of space and it is more advantageous to feed the gas back via the corridor 5, as is indicated in Fig. 7 by means of arrows G. This leads to a significant reduction in the amount of space required. In addition, another result thereof is that the corridor 5 is also conditioned, albeit slightly less well than the chamber compartments 3, so that it is possible to open the door 9 of a chamber compartment during use while causing minimal disturbance to the climate.

In Fig. 7, the conveying stream of the products to be treated in the climate chamber, such as chicks, is indicated by means of arrows K. The products are preferably discharged via door 11 and the products are preferably supplied via door 10, 11 since the supply side can thus be kept relatively clean, which prevents contamination.

The chamber compartments of this climate chamber are provided with heat exchangers at opposite sides. The inflow side of the chamber compartment which is most upstream is in each case delimited by a heat exchanger 7, the outflow side of the most downstream chamber compartment is in each case delimited by a heat exchanger 8 and adjacent chamber compartments are in each case delimited with respect to one another by a heat exchanger 1. These heat exchangers 1, 7 and 8 may be substantially identical with respect to one another, but given the fact that the heat exchangers 7 and 8 only delimit a chamber compartment on one side, it will be clear to those skilled in the art that these heat exchangers 7 and 8 may also be of a different design, in particular on the side which is remote from the chamber compartment 4. The heat exchangers 1, 7 and 8 are of the kind which are composed of a panel-shaped body 21 provided with perforations 25 and 26, as well as with fluid lines 22. The gas stream through the chamber compartments and the perforations in the panel-shaped body 21 are in this case indicated by means of arrows L. Ventilation means 50, such as fans, in this case ensure that the gas stream is maintained. These ventilation means may as such be provided at various locations, but will usually be provided in the inlet chamber 12 and/or the outlet chamber 13.

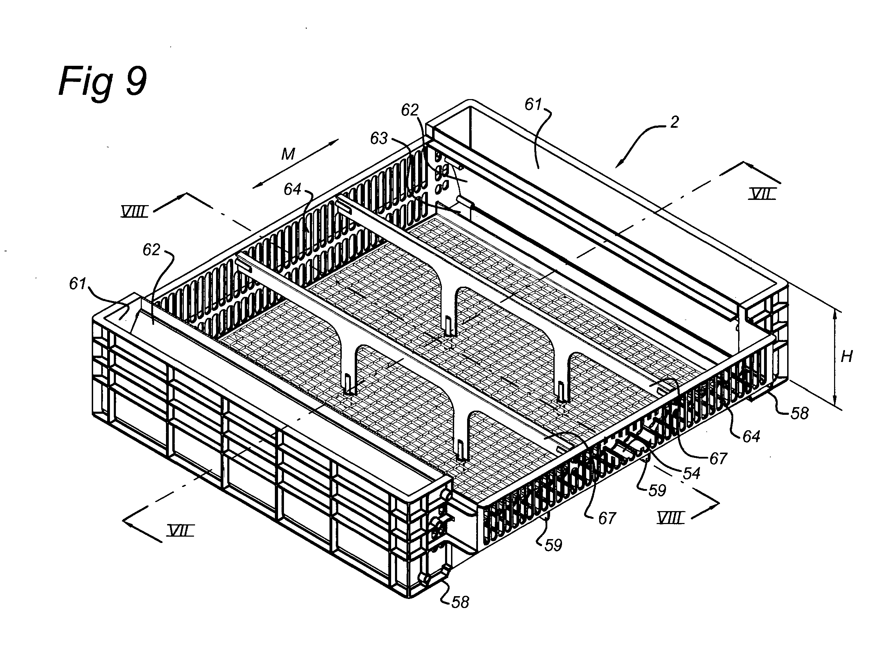

As stated above, the climate chamber 3 is in particular provided with heat exchangers 1, 7 and 8 as described in various further embodiments with reference to Figs 4, 5 and 6. 1, 2, 3 or more rows 6 of stacked crates 2 are placed in each chamber compartment. In particular, this will be 1 or 2 rows of stacks, such as two rows 6 of stacks, as illustrated diagrammatically in the central chamber compartment in Fig. 8. Depending on the depth, viewed at right angles to the plane of the drawing from Fig. 8, of each chamber compartment 4 and the length, viewed in the direction of double arrow M from Fig. 9, each row 6 of stacks of crates may comprise one or more stacks of crates.

Referring to Figs 9, 10, 11 and Fig. 6, if the heat exchangers 1, 7 and 8 are provided with drinking troughs 40, each crate preferably has a height H corresponding to the centre-to-centre distance C between the gassing ducts 28 and drinking troughs 40. Furthermore, the crate 2 is then provided with drinking passages 54 on one side, the side facing the drinking trough 40, so that the birds, in particular the chicks, can drink from a trough 40. These drinking passages 54 may be provided in a vertical side wall of the crate. However, it is particularly advantageous to provide that side of the crate 2 facing the drinking trough with, starting from the bottom, a bottom vertical wall part 51, a wall part 52 which is directed outwards from the top of the bottom vertical wall part 51, and a top wall part 53 which is directed vertically from the outer edge of the outwardly directed wall part 52. The outwardly directed wall part 52 of each crate 2 is in each case situated above a trough 40 and is provided with the drinking passages 54 which continue as far as just into the bottom vertical wall part 51 to increase drinking comfort. These drinking passages 54 are, on the one hand, dimensioned such that the birds can drink from the trough, but, on the other hand, cannot escape from the crate 2 via the drinking passage 54. The width E of the drinking passages is in this case approximately 22 mm, so that the chicks can stick their head through them, but their body is too large to pass through them. The bottom vertical wall part 51 forms a kind of railing which prevents the chicks from pushing each other as far as above the trough and ensures a correct drinking level. As an indication, for chicks of chickens, the bottom vertical wall part 51 may, in this case, have a height of approximately 50 mm to 55 mm and the top vertical wall part 53 may in this case have a height of approximately 90 mm to 110 mm.

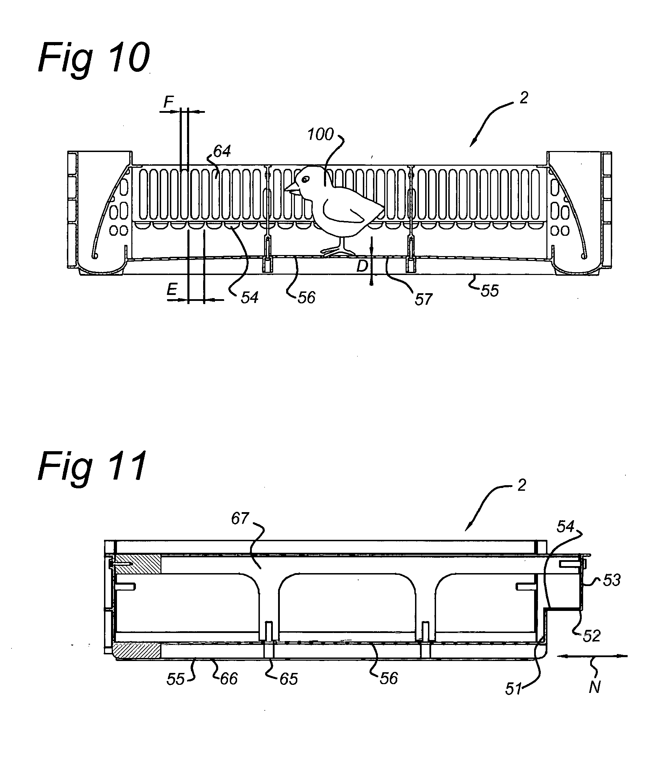

In order to ensure that the gas stream A can permeate the crate 2, the crate 2 is provided with ventilation openings on two opposite sides - which are at right angles to the gas stream A - in order to allow the gas stream A to pass. These ventilation passages have a width F, see Fig. 10, which is such that the animals, in particular the chicks, cannot escape through them. The width F is preferably such that the animals cannot stick their head out of the crate here.

In order to be able to feed the animals, such as the abovementioned chicks, the crate 2 is provided with a feeding trough 60. In order to allow the gas to flow through the crate 2 in a manner which is as unimpeded as possible, this feeding trough 60 is provided along a side of the crate 2 which is at right angles to the side along which the drinking trough 40, at least the drinking passages 54, are provided. The feeding trough 60 comprises, in a known manner, a partition 62 which separates the filling opening 61 from the feed opening 63 which is situated at a lower level.

The bottom of the crates is designed as a grate 56 with a removable baseplate 55 fitted underneath. This baseplate is advantageously made of a material containing cellulose, such as cardboard. The baseplate 55 can then be recycled and be disposed of together with the droppings as a disposable product. More generally, it is advantageous if the baseplate is made from a biodegradable material, such as a biodegradable plastic or biodegradable cardboard. This baseplate 55 is in particular provided at a distance D of 5 mm to 50 mm underneath the grate 56. Referring to Fig. 11, this baseplate 55 can be placed in the crate and removed from the crate by sliding in accordance with the double arrow N. To this end, the crate 2 is provided with two ribs 65 and 66 on the underside, between which there is a slot in which the opposite edges of the baseplate can be accommodated. When stacked, the supports 67 of a crate 2 underneath in each case provide support to the baseplate 55 of a crate 2 above. The underside of the grate is particular designed to be convex towards the top. In order to be able to move this crate 2 safely over a conveyor belt without a baseplate 55 but with chicks 100 or other animals without damaging the legs or toes of the animals, it is advantageous if the crate 2 is provided on the underside with supporting feet 58, which ensure that there is a minimum distance D of 5 to 15 mm between the underside of the grate 56 and the surface. In order to prevent the grate from sagging, it is provided with reinforcing ribs 59 on the underside. It should be noted that a stack of crates for young animals, such as chicks, described in this paragraph, is advantageous by itself: Stack comprising a plurality of crates, optionally containing animals, such as chicks, each crate having a bottom which is designed as a grate 56 having a removable baseplate 55 fitted underneath for collecting droppings.

It will also be obvious after the above description and drawings are included to illustrate some embodiments of the invention, and not to limit the scope of protection. Starting from this disclosure, many more embodiments will be evident to a skilled person which are within the scope of protection as defined by the appended claims.

## Claims

1. Climate chamber (1), such as a climate chamber (1) for poultry, in particular young chicken, in which the climate chamber (1) comprises;
- at least one heat exchanger (3) for heating or cooling the climate chamber (1) to an optimal temperature for growing young chicks,
- a main flow (A, Aᵣ) system for heating or cooling the young chicks by transferring heat of cold from the at least one heat exchanger (3) to the young chicks,
- at least one chamber compartment (2), at least one side of which is delimited upstream by the at least one heat exchanger (3),
**characterized in that**
the chamber compartment (3) comprises;
- a sensor device for measuring one or more parameters selected from the group (temperature, relative humidity, CO₂ content, flow velocity) in the at least one chamber compartment (2),
- secondary flow (B) system operationally coupled with the sensor device for controlling one or more parameters selected from the group (temperature, relative humidity, CO₂ content, flow velocity) in the at least one compartment (2).

2. Climate chamber according to claim 1, wherein the secondary flow system comprises a fan (8a, 8b) for controlling the secondary flow (B).

3. Climate chamber according to any preceding claim, wherein the secondary flow system (B) comprises an outlet (14) for debouching the secondary flow (B) in the main flow (A) in the at least one chamber compartment (2), and wherein said outlet (14) preferably forms part of the heat exchanger (3).

4. Climate chamber according to claim 3, wherein the heat exchanger (3) constitutes a passage for the secondary flow (B).

5. Climate chamber according to claim 3 or 4, wherein the secondary flow (B) system comprises a valve (15) at the outlet (14) for preventing ingress of dust and fine particles from the at least one chamber compartment (2) into the secondary flow (B) system, specifically preventing ingress of dust and fine particles from the at least one chamber compartment (2) into the interior of the heat exchanger (3).

6. Climate chamber according to any preceding claim, wherein the climate chamber (1) comprises a row (7) of chamber compartments (2) and wherein each chamber compartment (2) comprises a secondary flow (B) system.

7. Climate chamber according to claim 6, wherein the secondary flow (B) system of each chamber compartment (2) comprises a fan (8a, 8b) for controlling the secondary flow (B).

8. Climate chamber according to any preceding claim, wherein the secondary flow (B) system comprises an inlet for fresh air, wherein the inlet is separate from any other inlet of the climate chamber (1).

9. Climate chamber according to any preceding claim, wherein the at least one chamber compartment (2) comprises a compartment outlet (16) for releasing an overflow (C) for compensating the secondary flow (B).

10. Climate chamber according to claim 9, wherein the overflow (C) debouches in the main flow (Aᵣ) outside the at least one chamber compartment (2).

11. Climate chamber according to claim 9 or 10, wherein the chamber compartment (2) comprises a door (4) for allowing a stack of crates in and out the chamber compartment (2) and wherein preferably the compartment outlet (16) is provided below the door (4).

12. Climate chamber according to claim 11, where the door is hingeable towards the ceiling of the climate chamber for hamper free allowing a stack of crates in and out the chamber compartment (2).

13. Climate chamber according to any of the claims 9-12, wherein the climate chamber (1) comprises a chamber outlet (17) for releasing the overflow (C) outside the climate chamber.

14. Climate chamber according to claim 13, wherein a chamber outlet heat exchanger is provided at the chamber outlet (17) for winning back heat or cold from the released overflow (C) from the climate chamber.

## Patentansprüche

1. Klimakammer (1), beispielsweise eine Klimakammer (1) für Geflügel, insbesondere Küken, wobei die Klimakammer (1) aufweist;
- zumindest einen Wärmetauscher (3) zum Heizen oder Kühlen der Klimakammer (1) auf eine optimale Temperatur zum Züchten von Küken,
- ein Hauptfluss-System (A, Aᵣ) zum Heizen oder Kühlen der Küken durch Transferieren von Wärme von der Kälte von dem zumindest einen Wärmetauscher (3) zu den Küken,
- zumindest ein Kammerabteil (2), von welchem zumindest eine Seite stromaufwärts durch den zumindest einen Wärmetauscher (3) begrenzt ist,
**dadurch gekennzeichnet, dass** das Kammerabteil (3) aufweist;
- eine Sensorvorrichtung zum Messen eines oder mehrerer Parameter ausgewählt aus der Gruppe (Temperatur, Relative Feuchtigkeit, CO₂-Gehalt, Fließgeschwindigkeit) in dem zumindest einen Kammerabteil (2),
- Sekundärfluss-System (B), welches operationell mit der Sensorvorrichtung verbunden ist, um einen oder mehrere Parameter ausgewählt aus der Gruppe (Temperatur, relative Feuchtigkeit, CO₂-Gehalt, Fließgeschwindigkeit) in dem zumindest einen Kammerabteil (2) zu steuern.

2. Klimakammer nach Anspruch 1, wobei das Sekundärfluss-System ein Gebläse (8a, 8b) zum Regulieren des Sekundärflusses (B) aufweist.

3. Klimakammer nach einem der voranstehenden Ansprüche, wobei das Sekundärfluss-System (B) einen Auslass (14) zum Leiten des Sekundärflusses (B) in den Hauptfluss (A) in dem zumindest einen Kammerabteil (2) aufweist, und wobei der genannte Auslass (14) vorzugsweise einen Teil des Wärmetauschers (3) bildet.

4. Klimakammer nach Anspruch 3, wobei der Wärmetauscher (3) einen Durchfluss für den Sekundärfluss (B) bildet.

5. Klimakammer nach Anspruch 3 oder 4, wobei das Sekundärfluss-System (B) ein Ventil (15) am Auslass (14) aufweist zum Verhindern von Eindringen von Staub und feinen Partikeln von dem zumindest einen Kammerabteil (2) in das Sekundärfluss-System (B), insbesondere zum Verhindern von Eindringen von Staub und feinen Partikeln vom zumindest einen Kammerabteil (2) in das Innere des Wärmetauschers (3).

6. Klimakammer nach einem der voranstehenden Ansprüche, wobei die Klimakammer (1) eine Reihe (7) von Kammerabteilen (2) aufweist und wobei jedes Kammerabteil (2) ein Sekundärfluss-System (B) aufweist.

7. Klimakammer nach Anspruch 6, wobei das Sekundärfluss-System (B) jedes Kammerabteils (2) ein Gebläse (8a, 8b) zum Regulieren des Sekundärflusses (B) aufweist.

8. Klimakammer nach einem der voranstehenden Ansprüche, wobei das Sekundärfluss-System (B) einen Einlass für Frischluft aufweist, wobei der Einlass von anderen Einlässen der Klimakammer (1) getrennt ist.

9. Klimakammer nach einem der voranstehenden Ansprüche, wobei das zumindest eine Kammerabteil (2) einen Abteils-Auslass (16) zum Auslassen eines Überlaufs (C) zum Kompensieren des Sekundärflusses (B) aufweist.

10. Klimakammer nach Anspruch 9, wobei der Überlauf (C) außerhalb des zumindest einen Kammerabteils (2) in den Hauptfluss (Aᵣ) mündet.

11. Klimakammer nach Anspruch 9 oder 10, wobei das Kammerabteil (2) eine Tür (4) zum Ermöglichen eines Stapels von Behältnissen innerhalb und außerhalb des Kammerabteils (2) aufweist und wobei der Abteil-Auslass (16) vorzugsweise unterhalb der Tür (4) vorgesehen ist.

12. Klimakammer nach Anspruch 11, bei welcher die Tür zur Decke der Klimakammer schwenkbar ist, um ohne Behinderung einen Stapel von Behältnissen innerhalb und außerhalb des Kammerabteils (2) zu ermöglichen.

13. Klimakammer nach einem der Ansprüche 9-12, wobei die Klimakammer (1) einen Kammer-Auslass zum Auslassen des Überlaufs (C) außerhalb der Klimakammer aufweist.

14. Klimakammer nach Anspruch 13, wobei ein Kammer-Auslass-Wärmetauscher am Kammer-Auslass (17) bereitgestellt ist, um Wärme oder Kälte von dem von der Klimakammer ausgelassenen Überlaufs (C) zurückzugewinnen.

## Revendications

1. Chambre climatisée (1), telle qu'une chambre climatisée (1) pour volailles, et en particulier pour jeunes poulets, dans laquelle la chambre climatisée (1) comprend :
- au moins un échangeur thermique (3) destiné à chauffer ou à refroidir ladite chambre climatisée (1) à une température optimale pour le développement des jeunes poulets,
- un système à écoulement principal (A, Aᵣ) destiné à chauffer ou à refroidir lesdits jeunes poulets en transférant de la chaleur ou du froid dudit échangeur thermique (3) vers lesdits jeunes poulets,
- au moins un compartiment de chambre (2), dont au moins un côté est délimité en amont par ledit échangeur thermique (3),
**caractérisée en ce que**
ledit compartiment de chambre (3) comprend :
- un dispositif formant capteur destiné à mesurer un ou plusieurs paramètre(s) choisi(s) parmi le groupe (température, l'humidité relative, la teneur en CO₂, le débit) dans le au moins un compartiment de chambre (2),
- un système à écoulement secondaire (B) relié audit dispositif formant capteur afin de contrôler un ou plusieurs paramètre(s) choisi(s) parmi le groupe (température, l'humidité relative, la teneur en CO₂, le débit) dans le au moins un compartiment (2).

2. Chambre climatisée selon la revendication 1, dans laquelle ledit système à écoulement secondaire comprend un ventilateur (8a, 8b) destiné à contrôler ledit écoulement secondaire (B).

3. Chambre climatisée selon l'une quelconque des revendications précédentes, dans laquelle ledit système à écoulement secondaire (B) comprend une évacuation (14) destinée à faire déboucher ledit écoulement secondaire (B) dans ledit écoulement principal (A) dans ledit compartiment de chambre (2), et dans laquelle ladite évacuation (14) fait de préférence partie dudit échangeur thermique (3).

4. Chambre climatisée selon la revendication 3, dans laquelle ledit échangeur thermique (3) constitue un passage pour ledit écoulement secondaire (B).

5. Chambre climatisée selon la revendication 3 ou 4, dans laquelle ledit système à écoulement secondaire (B) comprend une soupape (15) au niveau de ladite évacuation (14) afin d'empêcher l'entrée de poussières et de fines particules provenant dudit compartiment de chambre (2) dans ledit système à écoulement secondaire (B), et plus particulièrement l'entrée de poussières et de fines particules provenant dudit compartiment de chambre (2) à l'intérieur dudit échangeur thermique (3).

6. Chambre climatisée selon l'une quelconque des revendications précédentes, dans laquelle la chambre climatisée (1) comprend une rangée (7) de compartiments de chambre (2), et dans laquelle chaque compartiment de chambre (2) comprend un système à écoulement secondaire (B).

7. Chambre climatisée selon la revendication 6, dans laquelle ledit système à écoulement secondaire (B) de chaque compartiment de chambre (2) comprend un ventilateur (8a, 8b) destiné à contrôler ledit écoulement secondaire (B).

8. Chambre climatisée selon l'une quelconque des revendications précédentes, dans laquelle ledit système à écoulement secondaire (B) comprend une admission d'air libre, ladite admission étant séparée de toute autre admission de ladite chambre climatisée (1).

9. Chambre climatisée selon l'une quelconque des revendications précédentes, dans laquelle ledit compartiment de chambre (2) comprend une évacuation de compartiment (16) destinée à évacuer un trop-plein (C) afin de compenser ledit écoulement secondaire (B).

10. Chambre climatisée selon la revendication 9, dans laquelle ledit trop-plein (C) débouche dans ledit écoulement principal (Aᵣ) à l'extérieur dudit compartiment de chambre (2).

11. Chambre climatisée selon la revendication 9 ou 10, dans laquelle le compartiment de chambre (2) comprend une porte (4) destinée à permettre le passage d'une pile de caisses à l'intérieur et à l'extérieur dudit compartiment de chambre (2), et dans laquelle ladite évacuation de compartiment (16) est de préférence prévue sous ladite porte (4).

12. Chambre climatisée selon la revendication 11, dans laquelle ladite porte peut être articulée vers le plafond de ladite chambre climatisée afin de permettre le passage sans entrave d'une pile de caisses à l'intérieur et à l'extérieur dudit compartiment de chambre (2).

13. Chambre climatisée selon l'une quelconque des revendications 9 à 12, dans laquelle la chambre climatisée (1) comprend une évacuation de chambre (17) destinée à évacuer ledit trop-plein (C) à l'extérieur de ladite chambre climatisée.

14. Chambre climatisée selon la revendication 13, dans laquelle un échangeur thermique d'évacuation de chambre est prévu au niveau de ladite évacuation de la chambre (17) afin de récupérer la chaleur ou le froid dudit trop-plein (C) évacué de ladite chambre climatisée.
